(19) Europäisches Patentamt
European Patent Office
Office européen des brevets

(11) **EP 3 161 586 B1**

(12) **EUROPEAN PATENT SPECIFICATION**

(45) Date of publication and mention
of the grant of the patent:
**05.08.2020 Bulletin 2020/32**

(51) Int Cl.:
***G06F 1/32*** *(2019.01)*

(21) Application number: **15751075.1**

(86) International application number:
**PCT/IB2015/054835**

(22) Date of filing: **26.06.2015**

(87) International publication number:
**WO 2015/198286 (30.12.2015 Gazette 2015/52)**

(54) **METHOD AND SYSTEM FOR REGULATING IN REAL TIME THE CLOCK FREQUENCIES OF AT LEAST ONE CLUSTER OF ELECTRONIC MACHINES**

VERFAHREN UND SYSTEM ZUR ECHTZEIT-REGELUNG DER TAKTFREQUENZEN VON MINDESTENS EINER GRUPPE VON ELEKTRONISCHEN MASCHINEN

PROCÉDÉ ET SYSTÈME POUR RÉGULER EN TEMPS RÉEL LES FRÉQUENCES D'HORLOGE D'AU MOINS UN GROUPE DE MACHINES ÉLECTRONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2014 IT GE20140062**

(43) Date of publication of application:
**03.05.2017 Bulletin 2017/18**

(73) Proprietors:
• **Consiglio Nazionale Delle Ricerche**
**00185 Roma (IT)**
• **UNIVERSITA' DEGLI STUDI DI CAGLIARI**
**09124 Cagliari (IT)**

(72) Inventors:
• **CAVIGLIONE, Luca**
**I-16138 Genova (IT)**
• **PISANO, Alessandro**
**I-09134 Cagliari (IT)**

(74) Representative: **Borsano, Corrado et al**
**Metroconsult S.r.l.**
**Foro Buonaparte, 51**
**20121 Milano (IT)**

(56) References cited:
WO-A2-2012/170214    US-A1- 2002 099 964
US-A1- 2002 169 990    US-A1- 2008 028 249
US-A1- 2009 094 437    US-A1- 2009 328 055
US-A1- 2011 289 329    US-A1- 2012 066 526

## Description

### Field of the invention.

The present invention relates to a method and a system for regulating in real time the clock frequencies of at least one cluster of electronic machines operating under a variable load.

### State of the art.

Network accessible services have become increasingly complex and are simultaneously used by millions of people (e.g. online social networks, data storage and cloud computing systems), thus requiring the use of Internet-scale infrastructures.

The latter are characterized by a large number of machines, which may also have heterogeneous or specialized hardware and functionalities (e.g. entities for database management o entities offering routing services).

As a consequence, the energy requirements of these installations is critical, since they also imply high running and accessory costs (e.g. for dissipating the generated heat). It should also be pointed out that such installations operate under variable loads (since the load is determined by the instantaneous requests coming from the service users), and it is therefore possible to adopt energy saving policies that deactivate a part of the host computers or reduce the operating frequency and/or the power voltage of the CPU under low-load conditions. In parallel, the current consumer technology implements the Advanced Configuration and Power Interface (ACPI) standard, which allows changing the consumption profile of the host computers, mainly by acting upon the operating frequency and/or the power voltage of the CPU (and of some peripherals).

However, the ACPI interface only offers a management mechanism, without providing any control algorithm. The low-level control mechanisms for energy saving purposes currently known in the art act upon the operating frequency and/or the power voltage (Dynamic Voltage Frequency Scaling - DVFS technique), without however taking into account any global performance index.

Moreover, the management of a complex system at individual machine level is not scalable, and makes the control problem difficult to be solved in real time.

The use of a distributed approach is a known palliative; however, since it acts locally, this cannot take into account the delays introduced both by the turning on/off of the machines and by the changes in the operating frequency. This also implies the impossibility of ensuring global optimization indices.

The invention has been developed within the frame of a research activity on the reduction of the energy consumption of ICT infrastructures responsible for providing complex services.

From a technical viewpoint, the following aspects or problems of the prior art are of fundamental importance:

i) presence of a standard (whether *de-jure* or *de-facto*) for controlling the frequency of commercial CPUs and peripherals, i.e. the ACPI standard;
ii) wide literature on the use of DVFS techniques for consumption optimization and for adapting the hosts' clock frequencies to the workload;
iii) numerous cases of use of feedback-based control techniques for optimizing multi-CPU systems;
iv) absence of a two-layer system that allows control at individual machine level in installations equipped with a large number of hosts;
v) absence of an architecture where machines are partitioned into virtual clusters (also referred to as groups or agglomerates), considering concurrence in a common purpose as a joining element;
vi) diffusion of the "Opencompute" standard.

US-8,301,925-B2 describes a method for regulating in real time the operating frequencies of at least one cluster or group of machines, wherein frequencies are considered on two abstraction layers, i.e. an upper layer and a lower layer.

The upper layer is implemented by direct measurement of instantaneous power consumption, and therefore it does not take into account the workload of groups or clusters of machines.

In addition, the lower layer (i.e. the one that manages individual machines, as opposed to "aggregates" of the same) has not been developed with characteristics that ensure system scalability.

US-2009/328055-A1 describes a logic for improving the energetic efficiency of Multi-Processor-Systems-On-Chips (MPSPOC) architectures through a shut-down logic for the individual cores and a thread re-allocation strategy. The method proposed therein uses a metrics that also takes into account the number of threads in the queues, but does not provide a "fine" adjustment of the operating frequencies of the single CPUs nor any scalability mechanism for managing large-scale architectures.

Further prior art documents are WO 2012/170214, US 2011/289329 and US 2002/169990. A publication entitled:

"A Control Theoretic Approach for Energy-Efficient Management of Online Social Network Services" by L. Caviglione, A. Pisano, 978-1-4799-0756-4/13, IEEE, 2013, [TYRRENIAN2013] is known which describes a method for regulating the frequencies of a set of machines, which is only limited to the upper layer of the two-layer scheme of the present invention, and which is specialized for use as a tool for controlling a hardware installation intended for providing an Online Social Network service. Unlike the present invention, which uses a more general concept of "virtual capacity" in order to make the scheme applicable to broader contexts, said method uses, as a reference variable, a "virtual frequency". According to such a method, the algorithm for virtual capacity selection operates with a constant timing (every T seconds), whereas the present invention offers the possibility of adaptive timing of said algorithm. Furthermore, said method does not include any mechanism for allocating the individual clock frequencies of the individual hosts that make up the various aggregates (clusters) of machines.

## Summary of the invention

The invention is defined in the appendend independent claims. Preferred embodiments are defined in the dependent claims.

## Brief description of the drawings

Further objects and advantages of the present invention will become apparent from the following detailed description of a preferred embodiment (and variants) thereof referring to the annexed drawings, which are only supplied by way of non-limiting example, wherein:

Fig. 1 is a block diagram of the system according to the invention;
Fig. 2 illustrates the management of a plurality of queues, in accordance with an aspect of the present invention.

In the drawings, the same reference numerals and letters identify the same items or components.

## Detailed description of embodiments of the invention.

At each activation instant $T_i$, i=1,2,..., to be sized according to the required reactivity of the system, the non-linear controller CNL receives from the measurer M the deviation, measured at point d), between the current queue value and the reference queue value.

Then the non-linear controller calculates a reference virtual capacity value f, as a global performance index, for the cluster of machines, as per the above step e). The virtual capacity is chosen from a set of admissible values f[1], f[2], ..., f[K].

Based on the calculated reference virtual capacity value *f,* the mapping unit selects, among the admissible vectors, the "best" vector (which optimizes a multi-target performance index, hereafter referred to as J) containing the frequencies $f_i$, *i=1,...,N,* to be assigned to each machine, as per step f) .

At each activation instant $T_i$, i=1,2,..., the measurer acquires the difference between the current queue value and the reference queue value, and a new deviation is calculated, which is then provided again to the non-linear controller CNL in order to carry out a subsequent iterative step.

One option regarding the choice of the activation instants $T_i$ is to choose them equally spaced in time ($T_i$=i T), *de facto* activating the algorithm CNL every T seconds.

According to one possible alternative, the algorithm uses an adaptive timing which is load-dependent, i.e. dependent on the measured value of the request queue. In this case, in addition to detecting the deviation ε (defined below) from the reference queue value, the non-linear controller CNL must also evaluate the entire contents of the queue.

To this end, it is possible to define a number Q of operations, such that the non-linear controller will only be activated and will only execute the algorithm when the queue increases or decreases by the value Q of requests.

The cluster of machines is the abstraction of N entities, each operating at an operating frequency $f_i$ of its own.

The operating frequency "status" of the cluster is thus described by a frequency vector $f_i$ having the following structure: vector=[$f_1$, $f_2$, ..., $f_N$]

Due to technologic constraints, the frequency $f_i$ can take a limited number of values. For example, when using the ACPI standard, the frequency $f_i$ can typically take three/four values. Generally such values are equally distributed within the ranges [$f_{max}$/2, $f_{max}$] or [$f_{max}$/3, $f_{max}$].

By convention, a turned-off or in-idle machine has $f_i$ = 0.

Then the non-linear controller CNL produces, as a reference value, a "virtual" capacity *f,* meaning that it abstracts the single allocations into a single value not bound to the underlying technology, i.e. the vector that contains the operating frequencies $f_i$ of the individual machines.

Of course, $f$ must meet the constraint $f \leq f_{max}$; however, the presence of idle machines also allows $f \leq f_{max}/2$ or $f \leq f_{max}/3$. In this case, it will be necessary to turn off an appropriate number of machines for reaching such a value. Note that this innovative approach allows condensing into a single parameter also the presence of inactive nodes.

In one embodiment, the calculation of the virtual capacity value on the basis of the measured deviation provides for comparing the current measured deviation with the deviation measured at the previous step.

If the current measured deviation corresponds to a longer queue compared to the previously detected value, then the virtual capacity value will be increased to the immediately higher adjacent value. On the contrary, if the current measured deviation corresponds to a shorter queue, then the virtual capacity value will be decreased to the immediately lower adjacent value.

In this manner, the non-linear controller will consider the reference queue value and, if the queue is longer than the reference queue value and the variation trend goes towards a further increase in the queue value, it will calculate an increased virtual capacity value, so as to increase the computational capacity of the cluster of machines. This indicates, in fact, that the queue is growing and that the machines are not carrying out the requests quickly enough. If, on the contrary, the queue is shorter than the reference value, and is progressively getting even shorter, indicating an oversized operating frequency for the current workload, then the non-linear controller will calculate a lower virtual capacity value, corresponding to a lower speed of the machines.

In an improved embodiment, the calculation of the virtual capacity value based on the measured deviation provides for comparing the current measured deviation with a hysteresis parameter.

The hysteresis parameter is introduced in order to reduce the number of variations of $f$ to be made, in that it allows changing the virtual capacity value $f$ only when significant variations of the measured deviation occur. This means that the non-linear controller is prevented from changing the virtual capacity $f$ upon any small variation of the measured deviation.

The hysteresis parameter can be sized at will on the basis of the characteristics of the cluster of machines.

Let $\Delta$ be the hysteresis parameter. Let $\varepsilon[j]$ be the error or deviation measured at the j-th step. Let $f$ be the virtual capacity that one wishes to set for the cluster of machines, through the allocation calculated by the mapping unit. Let $f$ be in the range of $f_{min} \leq f \leq f_{max}$, where $f_{min}$ represents the minimum virtual capacity to be imposed on the cluster W (e.g. such value may represent a mix of turned-off machines and active machines operating at the minimum ACPI frequency). The maximum number of admissible turned-off (idle) machines is a design parameter, and $f_{min}=0$ will correspond, at most, to a fully deactivated cluster (i.e. with all machines in idle condition). $f$ is assumed to be discrete, i.e. selectable among K possible values f[1], f[2], ..., f[K] equally distributed within the range $[f_{min}, f_{max}]$. For finer control, the number K is advantageously greater than the number of frequency steps allowed by the ACPI standard. Let the operations of "increasing" and "decreasing" the virtual capacity f be forced to use only the previous/next steps of f.

In one embodiment, the non-linear controller CNL uses, for the calculation of the reference frequency value based on the measured deviation, the following algorithm:

At each activation instance it executes:

> *if* $[(\varepsilon[j] < -\Delta)$ AND $(\varepsilon[j] \leq \varepsilon[j-1])$ *then* f is increased *to the adjacent admissible value*
> *if* $[(\varepsilon[j] > \Delta)$ AND $(\varepsilon[j] \geq \varepsilon[j-1])$ *then* f is decreased to *the adjacent admissible value*

It is however possible to adopt different forms of the non-linear controller algorithm, provided that it implements a negative feedback logic on the deviation $\varepsilon$ (e.g. a P.I.D. algorithm or variants thereof). It is also possible, in the presence of very fast variations of the deviation $\varepsilon$, to modify the algorithm in such a way as to increase or decrease $f$ towards admissible values not immediately adjacent to the current value.

In a preferred embodiment, the mapping unit or mapper also acts as a computing unit for calculating, for each reference virtual capacity value, a set of vectors of operating frequency values for each machine. However, these may also be two separate units.

The mapping unit is responsible for finding an allocation vector that reflects, as accurately as possible, the current virtual capacity value $f$. However, this mapping problem is computationally exacting for the following reasons:

1) the number of machines that make up the cluster may be high, e.g. more than 10,000 units;
2) the standard mechanism for energetic management of consumer machines is based on ACPI, which provides a limited and discrete number of operating frequencies: numerically, this implies the use of integer variables;
3) the on/off condition of a machine is also an integer (binary) variable.
4) at the same time, it is desirable to minimize the number of machines that need to be turned on/off and for which the operating frequency needs to be changed, since such operations introduce delays.

To this end, the mapping unit uses an algorithm divided into two parts: an offline step for calculating, for each admissible virtual capacity value, a set of vectors of operating frequency values for each machine, to be carried out only once at the system design stage (or in the event of significant structural changes), and an online step for selecting the vector of operating frequency values for each machine on the basis of the calculated virtual capacity value, which is carried out at every variation of *f*.

However, also the offline process may require high computational resources. Therefore, in order to make the proposed method widely accessible, inexpensive, and executable on simple hardware, a randomized procedure is introduced for sampling all possible allocation vectors.

The calculation of a set of vectors of operating frequency values for each machine (offline step) for each virtual capacity value includes:

i) defining a number of turned-off machines $M_0[i]$, i=1,2,...,K for each admissible virtual capacity value f[i], and an additional parameter $M_0[K+1]$ that defines the minimum admissible number of turned-off machines.

ii) randomly generating, for each admissible virtual capacity value, a set of vectors of operating frequencies for the individual machines. The randomized generation procedure is carried out by taking into account the variation of the number of turned-off machines between the adjacent virtual capacity values. In particular, a sub-set of the calculated vectors must have a number of turned-off machines equal to the number of turned-off machines associated with the adjacent virtual capacity values. In this manner, constraints are imposed on the variation of the number of turned-on or turned-off machines among the admissible configuration vectors related to adjacent values of virtual capacity *f* by entering appropriate "link" values, for the purpose of reducing the number of machines with alternating on and off states.

The link is advantageously effected for both the lower adjacent virtual capacity value and the upper adjacent virtual capacity value.

If the modified version of the virtual capacity calculation algorithm is adopted, which can increase or decrease *f* towards admissible values not immediately adjacent to the current value, then the randomized generation of the admissible configuration vectors related to the discrete virtual capacity values will have to provide a link, in terms of number of turned-off machines, also to virtual capacity values that are not directly adjacent. Advantageously, the number of turned-off machines for each virtual capacity value may decrease linearly as the virtual capacity values grow, thus following a simple proportionality constant with a subsequent rounding off.

This reflects the fact that greater virtual capacities require smaller numbers of turned-off machines.

The method then provides a random procedure for sampling all possible allocation vectors.

A random generation is followed by a selection of the vectors composed of values that generate a mean as close as possible to the virtual capacity value taken into account.

This dramatically reduces the time required for calculating the set of vectors of operating frequency values for each machine for each virtual capacity value: said calculation, in fact, would be excessively costly in computational terms for very large clusters, if the vectors had to be calculated, starting from the virtual capacity values, as a linear combination of frequency values the mean of which corresponds to the virtual capacity under consideration.

One embodiment of the algorithm for the randomized selection of the configuration vectors includes the following operations:

Let the admissible values f[1], f[2], ..., f[K] for f be sorted in increasing order. Let L be the number of attempts, and let 1 be the number of values to be considered for the next online procedure. Let 1 << L. For the offline step, the vector calculation uses the following algorithm (executed by the mapping unit (mapper) M):

Let $M_0$=[$M_0[1]$, $M_0[2]$, ..., $M_0[K]$] be the vector that contains the number of turned-off machines for each value f[1], f[2], ..., f[K] of *f*, and let $M_0[K+1]$ be the minimum admissible number of turned-off machines. Calculation of the vectors associated with the frequency f[1]:

*set* the number of turned-off machines to $M_0[1]$
*generate* in a random manner L/2 admissible values for the remaining $M-M_0[1]$ machines

$$calculate\ \boldsymbol{err} = \left| f - \frac{1}{M - M0[1]} \sum_{i=1}^{M-M0[1]} f_i \right|$$

*choose* the 1/2 values that have a minimum *err*
*set* the number of turned-off machines to $M_0[2]$
*generate* in a random manner L/2 admissible values for the remaining $M-M_0[2]$ machines

$$calculate\ \boldsymbol{err}\ =\ \left| f - \frac{1}{M - M0[2]} \sum_{i=1}^{M-M0[2]} f_i \right|$$

*choose the* 1/2 values that have a minimum *err* Calculation of the vectors associated with the frequency f[i] (i=2,3,...,K-1):

> *set* the number of turned-off machines to $M_0[i-1]$
> *generate* in a random manner L/2 admissible values for the remaining $M-M_0[i-1]$ machines

$$calculate\ \boldsymbol{err}\ =\ \left| f - \frac{1}{M - M0[i-1]} \sum_{i=1}^{M-M0[i-1]} f_i \right|$$

*choose the* 1/2 values that have a minimum *err*
*set* the number of turned-off machines to $M_0[i]$
*generate* in a random manner L/2 admissible values for the remaining $M-M_0[i]$ machines

$$calculate\ \boldsymbol{err}\ =\ \left| f - \frac{1}{M - M0[i]} \sum_{i=1}^{M-M0[i]} f_i \right|$$

*choose the* 1/2 values that have a minimum *err* Calculation of the vectors associated with the frequency f[K]:

> *set* the number of turned-off machines to $M_0[K]$
> *generate* in a random manner L/2 admissible values for the remaining $M-M_0[K]$ machines

$$calculate\ \boldsymbol{err}\ =\ \left| f - \frac{1}{M - M0[K]} \sum_{i=1}^{M-M0[K]} f_i \right|$$

*choose* the 1/2 values that have a minimum *err*
*set* the number of turned-off machines to $M_0[K+1]$
*generate* in a random manner L/2 admissible values for the remaining $M-M_0[K+1]$ machines

$$calculate\ \boldsymbol{err}\ =\ \left| f - \frac{1}{M - M0[K+1]} \sum_{i=1}^{M-M0[K+1]} f_i \right|$$

*choose* the 1/2 values that have a minimum *err*

The procedure returns I*K vectors. As L grows, the error *err* decreases at the cost of a higher computational load.
The output of this procedure is indicated in the following table:

| Values of *f* calculated by CNL | Offline pre-allocation |
|---|---|
| *f*[1] | Vector$_1$ of values $f_i$ for *f*[1] <br> Vector$_2$ of values $f_i$ for *f*[1] <br> ... <br> Vector$_1$ of values $f_i$ for *f*[1] |

(continued)

| Values of *f* calculated by CNL | Offline pre-allocation |
|---|---|
| *f*[2] | Vector$_1$ of values $f_i$ for *f*[2]<br>Vector$_2$ of values $f_i$ for *f*[2]<br>...<br>Vector$_1$ of values $f_i$ for *f*[2] |
| ... | ... |
| *f*[K] | Vector$_1$ of values $f_i$ for *f*[K]<br>Vector$_2$ of values $f_i$ for *f*[K]<br>...<br>Vector$_1$ of values $f_i$ for *f*[K] |

where Vector$_i$ is a vector of operating frequency values $f_i$ for each machine.

At each value of f calculated by CNL, there are 1 vectors available. The mapper M chooses the optimal one to be used. The vector also contains the information about the connection between a single frequency and the machine involved that will have to use it, also in the case of f=0, which means that the machine is off.

The output of the offline procedure is then stored into a memory unit of the mapping unit, e.g. a flash memory or the like.

For this reason, M may be a very simple device, since there is a tradeoff between computational power and storage capacity (for storing the I*K values). According to a further embodiment, the setting of the operating frequency of each machine (online step) is performed by selecting, among the vectors related to the calculated virtual capacity value, the vector that provides the number of turned-off machines closest to the number of turned-off machines of the vector selected at the previous iterative step, or that provides the smallest number of changes to the operating frequencies of the individual machines with respect to the vector selected at the previous iterative step.

The setting of the operating frequency of each machine (online step) is made in such a way as to optimize a multi-target performance index (J) by choosing, among the vectors related to the virtual capacity value, the one that minimizes a cost index that "weighs", with arbitrary coefficients (hereafter referred to as a1, a2, a3), the deviation between the mean value of the vector and the virtual capacity f, the number of machines in the cluster that need to be turned on/off, and the number of machines in the cluster for which the operating frequency needs to be changed. Of course, these requests are in conflict with each other, and the weights can be chosen according to the case, in such a way as to obtain the desired tradeoff (e.g. to give priority to minimizing the number of machines to be turned on/off over the necessary number of frequency changes).

The vector selection procedure, which is the online part (executed by the mapper), uses the following algorithm: Let Vector be the current allocation, and let f[i] be the virtual capacity chosen by the algorithm (executed by CNL):

- Calculate, for each Vector$_j$ (j=1,2,...,I) associated with f[i], the difference between the number of idle machines in the configuration Vector$_j$ and the number of idle machines in the current configuration Vector. Let D$_j$ be such quantities.
- Calculate, for each Vector$_j$ associated with f[i], the number of machines the frequency of which should be changed in order to bring the cluster or worker into the configuration Vector$_j$ starting from the current configuration Vector. Let V$_j$ be such quantities.

$$\frac{1}{N}\sum_{i=1}^{N} f_i$$

- Calculate, for each Vector$_j$ associated with f[i], the difference between f[i] and the algebraic mean $\frac{1}{N}\sum_{i=1}^{N} f_i$ of the frequencies contained in the vector Vector$_j$. Siano S$_j$ tali quantità. Let S$_j$ be such quantities. Calculate, for each Vector$_j$ associated with f[i], the index J=a1 |D$_j$|+ a2 |V$_j$|+ a3 |S$_j$|, where a1, a2, a3 are non-negative "weights" chosen arbitrarily.
- Choose the Vector$_j$ corresponding to the minimum value of J.

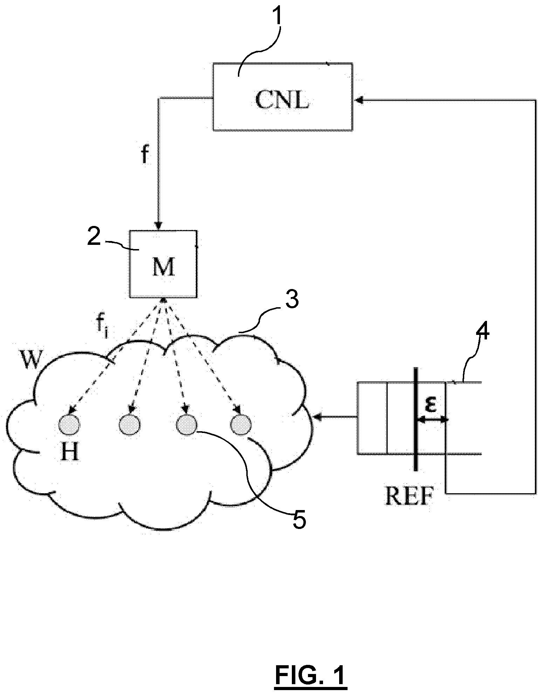

The control method proposed herein is based on the architecture shown in Figure 1. For simplicity, the following will describe the case wherein there is only one group of machines to be controlled.. However, the mechanism is designed for working in a scalable manner with multiple groups.

The non-linear controller 1 (CNL) is responsible for calculating the virtual or high-level capacity, designated as *f*. This value is the reference for the cluster of machines 3, the consumption of which needs be optimized.

The mapping unit 2, or Mapper (M), is the entity responsible for converting the value *f* into a frequency allocation for an individual machine, designated as $f_i$.

The cluster 3, or Worker (W), is a homogeneous group of machines 5 concurring in a common target. The cluster 3 is therefore populated by individual hosts/machines 5 (H). For example, the cluster 3 may consist of N nodes responsible for providing a database service, or N devices implementing network functionalities.

The queue 4 of the requests / processing load offered to W is essentially virtual, meaning that it is a measure of the volume of requests, or it is quantified by monitoring the queuing in the buffers of a controller/dispatcher. By way of example, in the case wherein W abstracts a Web Farm, the queue 4 will be represented by the backlog of the requests of the Web front-ends.

REF designates a value of the queue 4 that needs to be maintained.

ε designates the error, i.e. the deviation between the current value of the queue 4 and the desired value REF.

Said value is then returned to the CNL 1, which will use it to make the appropriate decision.

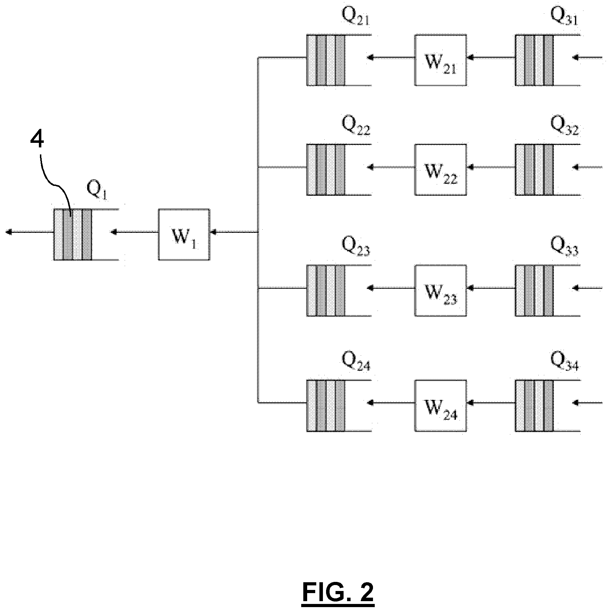

The architecture of Figure 1 can be extended to the case of multiple clusters 3, as shown in Figure 2. Due to the separate mapping units 4, the CNL 1 can consistently manage a variety...of heterogeneous machines.

The invention pursues the idea of abstracting a complex system as a chain of Workers (W, W1, W21....W24) interconnected by means of queues (Q1, Q21....Q24, Q31...Q34), by using non-linear control techniques for the energetic optimization of multi-CPU systems.

In view of a possible implementation of the system, the "Opencompute" standard has also been taken into account, which offers all the functionalities necessary for collecting data for building the reference queues and the remote interfaces for managing the servers (hence effectively applying the control results to the hardware).

Furthermore, "Opencompute" emphasizes the use of unified hardware also for the creation of network devices, thus making the "partitioning into workers" mechanism excellent for the integrated management of green-computing/networking policies.

The present invention can advantageously be implemented through a computer program, e.g. written in C or Java language, which comprises coding means for implementing one or more steps of the method when said program is executed by a computer. It is therefore understood that the protection scope extends to said computer program as well as to computer-readable means that comprise a recorded message, said computer-readable means comprising program coding means for implementing one or more steps of the method when said program is executed by a computer.

The above-described non-limiting examples may be subject to further variations without departing from the protection scope of the appended claims. The advantages deriving from the application of the present invention are apparent.

i) Availability of a scalable and runtime-implementable architecture which allows real-time dynamic variations of the operating frequencies of each physical entity (host) in one or more agglomerates or groups or clusters, for the purpose of reducing the energy consumption and the delays due to the turning on/off of the hosts and to the variations of their clock frequencies.

ii) Possibility of defining performance indices which are specific for the service being provided, thanks to the possibility of *ad-hoc* parametrization of said indices.

From the above description, those skilled in the art will be able to produce the object of the invention without introducing any further details.

**Claims**

1. Method for regulating in real time the clock frequencies of at least one cluster of electronic machines, **characterized in that** it comprises the following steps:

a) defining a finite number of discrete virtual capacity values f[1], f[2], ..., f[K], as global performance indices in terms of computational capacity of said cluster of machines;

b) calculating, by means of a randomized optimization procedure which takes into account the variation of the number of turned-off electronic machines between the adjacent virtual capacity values for each one of said virtual capacity values, a set of 1 vectors containing clock frequency values for each machine in said cluster, including:

i) defining a number of turned-off machines $M_0[i]$, i=1,2,...,K for each admissible virtual capacity value f[i], and an additional parameter $M_0[K+1]$ defining a minimum admissible number of turned-off machines;

ii) randomly generating, for each admissible discrete virtual capacity value f[i], said set of 1 vectors of clock frequency values for each machine in said cluster, said randomized generation being carried out by taking into account the variation of the number of turned-off machines between the adjacent discrete virtual capacity values, a sub-set of said 1 vectors having the number of turned-off machines equal to the number of turned-off machines associated with the adjacent virtual capacity values;

c) defining a reference queue value, related to the number of processing requests received by said cluster;

the method being further **characterised in that** it iteratively carries out the following steps:

d) measuring the deviation between a current queue value, related to a number of processing requests in a current queue of processing requests, and said reference queue value;
e) selecting one of said discrete virtual capacity values on the basis of said measured deviation, said selection occurring on the basis of a randomized procedure that, at each iteration, analyzes said measured deviation, compares it with the measured deviation value obtained at the previous iteration, and chooses whether to keep the current virtual capacity value or to adopt one of the adjacent values to said current virtual capacity value, by increasing or decreasing said value index (fi), as admissible virtual capacity values of said finite number of discrete values;
f) selecting, based on said selected virtual capacity value, a vector of clock frequency values for each machine from said set of 1 vectors, so as to optimize a multi-target performance index (J) by selecting, among said vectors related to the virtual capacity value, the one that minimizes a cost index that weights the deviation between the algebraic mean of the frequencies contained in the vector and said discrete virtual capacity value, the number of machines in the cluster that need to be turned on/off, and the number of machines in the cluster for which the clock frequency needs to be changed, the coefficients of said weight of the cost index being chosen giving priority to minimizing the number of machines to be turned on/off over the number of frequency changes, and then setting the clock frequency of each machine in the cluster.

2. Method according to claim 1, wherein the calculation of the virtual capacity value based on the measured deviation comprises comparing the current measured deviation with the deviation measured at the previous step, wherein, if the current measured deviation corresponds to an increase in said current queue value, then the virtual capacity value is increased to the next discrete value, or, if the current measured deviation corresponds to a decrease in said current queue value, then the virtual capacity value is decreased to the previous discrete value.

3. Method according to claim 2, wherein the calculation of the virtual capacity value based on the measured deviation comprises comparing the current measured deviation with a hysteresis parameter.

4. Method according to one or more of the preceding claims, wherein said calculation, for each virtual capacity value, of a set of vectors of clock frequency for each machine comprises generating a set of vectors such that a predetermined number of vectors provide a number of turned-off machines corresponding to the number of turned-off machines related to the adjacent virtual capacity values.

5. Method according to one or more of the preceding claims, wherein the setting of the clock frequency of each machine is performed by selecting, among the vectors related to the calculated virtual capacity value, the vector that provides the number of turned-off machines closest to the number of turned-off machines of the vector selected at the previous iterative step, or that provides the smallest number of changes to the operating frequencies of the individual machines with respect to the vector selected at the previous iterative step.

6. System for regulating in real time the clock frequencies of at least one cluster of electronic machines, **characterized in that** it comprises means adapted to carry out the the method of anyone of claims 1 to 5.

7. Computer program comprising instructions adapted to implement the steps of claims 1 to 5 when said program is executed on a computer of a system according to claim 6.

8. Computer-readable medium comprising a recorded computer program according to claim 7.

**Patentansprüche**

1. Verfahren zum Regeln der Taktfrequenzen von mindestens einem Cluster von elektronischen Maschinen in Echtzeit, **dadurch gekennzeichnet, dass** es die folgenden Schritte umfasst:

a) Definieren einer endlichen Anzahl diskreter virtueller Kapazitätswerte f[1], f[2],... , f[K] als globale Leistungsindizes in Bezug auf Rechenkapazität des Clusters von Maschinen;

b) Berechnen eines Satzes von I Vektoren, die Taktfrequenzwerte für jede Maschine in dem Cluster beinhalten, mittels einer randomisierten Optimierungsprozedur, die die Variation der Anzahl von abgeschalteten elektronischen Maschinen zwischen den benachbarten virtuellen Kapazitätswerten für jeden der virtuellen Kapazitätswerte berücksichtigt, einschließlich:

i) Definieren einer Anzahl von abgeschalteten Maschinen $M_0[i]$,i=1, 2,... K für jeden zulässigen virtuellen Kapazitätswert f[i], und eines zusätzlichen Parameters $M_0[K+1]$, der eine minimal zulässige Anzahl von abgeschalteten Maschinen definiert;

ii) randomisiertes Erzeugen, für jeden zulässigen diskreten virtuellen Kapazitätswert f[i], des Satzes von I Vektoren von Taktfrequenzwerten für jede Maschine in dem Cluster, wobei die randomisierte Erzeugung durch Berücksichtigen der Variation der Anzahl von abgeschalteten Maschinen zwischen den benachbarten diskreten virtuellen Kapazitätswerten durchgeführt wird, wobei ein Subsatz der I Vektoren die Anzahl der abgeschalteten Maschinen gleich der Anzahl von abgeschalteten Maschinen, die den benachbarten virtuellen Kapazitätswerten zugeordnet sind, aufweist;

c) Definieren eines Referenzwarteschlangenwertes, der sich auf die Anzahl von Verarbeitungsanfragen bezieht, die durch das Cluster empfangen werden;

wobei das Verfahren weiter **dadurch gekennzeichnet ist, dass** es iterativ folgende Schritte durchführt:

d) Messen der Abweichung zwischen einem gegenwärtigen Warteschlangenwert, der sich auf eine Anzahl von Verarbeitungsanfragen in einer gegenwärtigen Warteschlange von Verarbeitungsanfragen bezieht, und dem Referenzwarteschlangenwert;

e) Auswählen eines der diskreten virtuellen Kapazitätswerte auf der Grundlage der gemessenen Abweichung, wobei die Auswahl auf der Grundlage einer randomisierten Prozedur erfolgt, die, bei jeder Iteration, die gemessene Abweichung analysiert, sie mit dem bei der vorherigen Iteration erhaltenen gemessenen Abweichungswert vergleicht und auswählt, ob der gegenwärtige virtuelle Kapazitätswert beibehalten oder einer der benachbarten Werte zu dem gegenwärtigen virtuellen Kapazitätswert adoptiert werden soll, durch Erhöhen oder Verringern des Wertindexes (fi), als zulässige virtuelle Kapazitätswerte der endlichen Anzahl von diskreten Werten;

f) Auswählen, auf der Grundlage des ausgewählten virtuellen Kapazitätswertes, eines Vektors von Taktfrequenzwerten für jede Maschine aus dem Satz von I Vektoren, um einen Mehrziel-Leistungsindex (J) zu optimieren, durch Auswählen desjenigen unter den auf den virtuellen Kapazitätswert bezogenen Vektoren, der einen Kostenindex minimiert, der die Abweichung zwischen dem algebraischen Mittelwert der in dem Vektor beinhalteten Frequenzen und dem diskreten virtuellen Kapazitätswert, die Anzahl von Maschinen im Cluster, die ein-/abgeschaltet werden müssen, und die Anzahl von Maschinen im Cluster, für die die Taktfrequenz geändert werden muss, gewichtet, wobei die Koeffizienten dieser Gewichtung des Kostenindexes so ausgewählt werden, dass dem Minimieren der Anzahl von ein-/abzuschaltenden Maschinen vor der Anzahl von Frequenzänderungen Priorität eingeräumt wird, und dann Einstellen der Taktfrequenz von jeder Maschine im Cluster.

2. Verfahren nach Anspruch 1, wobei die Berechnung des virtuellen Kapazitätswertes auf der Grundlage der gemessenen Abweichung Vergleichen der gegenwärtig gemessenen Abweichung mit der im vorherigen Schritt gemessenen Abweichung umfasst, wobei, wenn die gegenwärtig gemessene Abweichung einer Erhöhung im gegenwärtigen Warteschlangenwert entspricht, dann der virtuelle Kapazitätswert auf den nächsten diskreten Wert erhöht wird, oder, wenn die gegenwärtig gemessene Abweichung einer Verringerung im gegenwärtigen Warteschlangenwert entspricht, dann der virtuelle Kapazitätswert auf den vorherigen diskreten Wert verringert wird.

3. Verfahren nach Anspruch 2, wobei die Berechnung des virtuellen Kapazitätswertes auf der Grundlage der gemessenen Abweichung Vergleichen der gegenwärtig gemessenen Abweichung mit einem Hystereseparameter umfasst.

4. Verfahren nach einem oder mehreren der vorstehenden Ansprüche, wobei die Berechnung, für jeden virtuellen Kapazitätswert, eines Satzes von Vektoren der Taktfrequenz für jede Maschine Erzeugen eines Satzes von Vektoren umfasst, so dass eine vorbestimmte Anzahl von Vektoren eine Anzahl von abgeschalteten Maschinen bereitstellt, die der Anzahl von abgeschalteten Maschinen in Bezug auf die benachbarten virtuellen Kapazitätswerte entspricht.

5. Verfahren nach einem oder mehreren der vorstehenden Ansprüche, wobei das Einstellen der Taktfrequenz von jeder Maschine durch Auswählen desjenigen Vektors unter den auf den berechneten virtuellen Kapazitätswert bezogenen Vektoren durchgeführt wird, der die Anzahl von abgeschalteten Maschinen bereitstellt, die der Anzahl der abgeschalteten Maschinen des im vorherigen Iterationsschritt ausgewählten Vektors am nächsten kommt, oder der die kleinste Anzahl von Änderungen an den Betriebsfrequenzen der einzelnen Maschinen in Bezug auf den im vorherigen Iterationsschritt ausgewählten Vektor bereitstellt.

6. System zum Regeln der Taktfrequenzen von mindestens einem Cluster von elektronischen Maschinen in Echtzeit, **dadurch gekennzeichnet, dass** es Mittel umfasst, die dafür angepasst sind, das Verfahren nach einem der Ansprüche 1 bis 5 durchzuführen.

7. Computerprogramm, das Anweisungen umfasst, die dafür angepasst sind, die Schritte der Ansprüche 1 bis 5 zu implementieren, wenn das Programm auf einem Computer eines Systems nach Anspruch 6 ausgeführt wird.

8. Computerlesbares Medium, das ein aufgezeichnetes Computerprogramm nach Anspruch 7 umfasst.

**Revendications**

1. Procédé pour réguler en temps réel les fréquences d'horloge d'au moins un groupe de machines électroniques, **caractérisé en ce qu'**il comprend les étapes suivantes :

   a) la définition d'un nombre fini de valeurs de capacité virtuelle discrètes f[1], f[2], ..., f[K], en tant qu'indices de performance globale en termes de capacité de calcul informatique dudit groupe de machines ;
   b) le calcul, au moyen d'une procédure d'optimisation aléatoire qui prend en compte la variation du nombre de machines électroniques hors tension entre les valeurs de capacité virtuelle adjacentes pour chacune desdites valeurs de capacité virtuelle, d'un ensemble de 1 vecteurs contenant des valeurs de fréquence d'horloge pour chaque machine dans ledit groupe, comportant :

   i) la définition d'un nombre de machines hors tension $M_0[i]$, $i = 1, 2, ..., K$ pour chaque valeur de capacité virtuelle admissible f[i], et d'un paramètre supplémentaire $M_0[K+1]$ définissant un nombre admissible minimal de machines hors tension ;
   ii) la génération aléatoire, pour chaque valeur de capacité virtuelle discrète admissible f[i], dudit ensemble de 1 vecteurs de valeurs de fréquence d'horloge pour chaque machine dans ledit groupe, ladite génération aléatoire étant réalisée en prenant en compte la variation du nombre de machines hors tension entre les valeurs de capacité virtuelle discrètes adjacentes, un sous-ensemble desdits 1 vecteurs ayant le nombre de machines hors tension égal au nombre de machines hors tension associées aux valeurs de capacité virtuelle adjacentes ;

   c) la définition d'une valeur de file d'attente de référence, liée au nombre de requêtes de traitement reçues par ledit groupe ;

   le procédé étant en outre **caractérisé en ce qu'**il réalise de façon itérative les étapes suivantes :

   d) la mesure de l'écart entre une valeur de file d'attente actuelle, liée à un nombre de requêtes de traitement dans une file d'attente actuelle de requêtes de traitement, et ladite valeur de file d'attente de référence ;
   e) la sélection de l'une desdites valeurs de capacité virtuelle discrètes sur la base dudit écart mesuré, ladite sélection se produisant sur la base d'une procédure aléatoire qui, à chaque itération, analyse ledit écart mesuré, le compare avec la valeur d'écart mesurée obtenue à l'itération précédente, et choisit de garder la valeur de capacité virtuelle actuelle ou d'adopter l'une des valeurs adjacentes à ladite valeur de capacité virtuelle actuelle, en augmentant ou en diminuant ledit indice de valeur (fi), en tant que valeurs de capacité virtuelle admissibles dudit nombre fini de valeurs discrètes ;
   f) la sélection, d'après ladite valeur de capacité virtuelle sélectionnée, d'un vecteur de valeurs de fréquence d'horloge pour chaque machine à partir dudit ensemble de 1 vecteurs, de façon à optimiser un indice de performance multi-cible (J) en sélectionnant, parmi lesdits vecteurs liés à la valeur de capacité virtuelle, celui qui minimise un indice de coût qui pondère l'écart entre la moyenne algébrique des fréquences contenues dans le vecteur et ladite valeur de capacité virtuelle discrète, le nombre de machines dans le groupe qui doivent être mises sous tension/hors tension, et le nombre de machines dans le groupe pour lesquelles la fréquence d'horloge doit être changée, les coefficients de ladite pondération de l'indice de coût étant choisis en donnant priorité à la minimisation du nombre de machines à mettre sous tension/hors tension sur le nombre de changements de fréquence, puis le réglage de la fréquence d'horloge de chaque machine dans le groupe.

2. Procédé selon la revendication 1, dans lequel le calcul de la valeur de capacité virtuelle d'après l'écart mesuré comprend la comparaison de l'écart mesuré actuel avec l'écart mesuré à l'étape précédente, dans lequel, si l'écart mesuré actuel correspond à une augmentation de ladite valeur de file d'attente actuelle, alors la valeur de capacité virtuelle est augmentée à la valeur discrète suivante, ou, si l'écart mesuré actuel correspond à une diminution de ladite valeur de file d'attente actuelle, alors la valeur de capacité virtuelle est diminuée à la valeur discrète précédente.

3. Procédé selon la revendication 1, dans lequel le calcul de la valeur de capacité virtuelle d'après l'écart mesuré comprend la comparaison de l'écart mesuré actuel avec un paramètre d'hystérésis.

4. Procédé selon l'une ou plusieurs des revendications précédentes, dans lequel ledit calcul, pour chaque valeur de capacité virtuelle, d'un ensemble de vecteurs de fréquence d'horloge pour chaque machine comprend la génération d'un ensemble de vecteurs de sorte qu'un nombre prédéterminé de vecteurs fournissent un nombre de machines hors tension correspondant au nombre de machines hors tension liées aux valeurs de capacité virtuelle adjacentes.

5. Procédé selon l'une ou plusieurs des revendications précédentes, dans lequel le réglage de la fréquence d'horloge de chaque machine est effectué en sélectionnant, parmi les vecteurs liés à la valeur de capacité virtuelle calculée, le vecteur qui fournit le nombre de machines hors tension le plus proche du nombre de machines hors tension du vecteur sélectionné à l'étape itérative précédente, ou qui fournit le plus petit nombre de changements aux fréquences de fonctionnement des machines individuelles par rapport au vecteur sélectionné à l'étape itérative précédente.

6. Système pour réguler en temps réel les fréquences d'horloge d'au moins un groupe de machines électroniques, **caractérisé en ce qu'**il comprend des moyens adaptés pour réaliser le procédé de l'une quelconque des revendications 1 à 5.

7. Programme d'ordinateur comprenant des instructions adaptées pour mettre en œuvre les étapes des revendications 1 à 5 lorsque ledit programme est exécuté sur un ordinateur d'un système selon la revendication 6.

8. Support lisible par ordinateur comprenant un programme d'ordinateur enregistré selon la revendication 7.

**FIG. 1**

**FIG. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8301925 B2
- US 2009328055 A1
- WO 2012170214 A
- US 2011289329 A
- US 2002169990 A

**Non-patent literature cited in the description**

- A Control Theoretic Approach for Energy-Efficient Management of Online Social Network Services. **L. CAVIGLIONE.** A. Pisano, 978-1-4799-0756-4/13. IEEE, 2013